# EUROPEAN PATENT APPLICATION

(11) **EP 4 613 553 A1**
(43) Date of publication of application: **10.09.2025**
(21) Application number: 23886340.1
(22) Date of filing: 03.11.2023
(51) Int. Cl.: B60P 3/36, B60H 1/00, B60P 3/22

(54) **MOBILE-HOME-TYPE TRAILER**

(30) Priority: 04.11.2022 KR 20220146475; 04.11.2022 KR 20220146476; 10.03.2023 KR 20230031853; 13.03.2023 KR 20230032752
(71) Applicant: LG Electronics Inc., Yeongdeungpo-gu Seoul 07336 (KR)
(72) Inventor: AHN, Kwangwoon, Seoul 08592 (KR); LEE, Jungsuk, Seoul 08592 (KR); LEE, Won-jin, Seoul 08592 (KR); OH, Min-kyu, Seoul 08592 (KR); YOO, Joong-gil, Seoul 08592 (KR); CHA, Hyunbyung, Seoul 08592 (KR); LEE, Sang-yoon, Seoul 08592 (KR); YUK, Jimin, Seoul 08592 (KR); HWANG, Sung-gul, Seoul 08592 (KR)
(74) Representative: Vossius & Partner Patentanwälte Rechtsanwälte mbB
(86) International application number: PCT/KR2023/017442
(87) International publication number: WO 2024/096646

(57) **Abstract**

The present invention relates to a mobile-home-type trailer. The mobile-home-type trailer according to an embodiment of the present invention may comprise a trailer body and an air conditioner. The air conditioner according to an embodiment of the present invention can be provided, in a machine room formed at a position biased toward one side in the trailer body, so as not to be exposed to the outside. Therefore, the risk of breakdown or damage caused by external foreign materials or the like during moving or use thereof can be minimized without affecting the exterior of the trailer body.

## Description

### Technical Field

The present disclosure generally relates to a mobile-home-type trailer and, more particularly, to a mobile-home-type trailer that can be moved by a vehicle.

### Background Art

Recently, a mobile home-type trailer has become widely popular, which allows a user to stay in a desired location without being restricted by a place by installing a box-shaped trailer including living utensils such as a bed and kitchen inside and towing the trailer with a vehicle.

This type of mobile-home-type trailer is known by various names such as caravan, camping trailer, etc.

Since the mobile-home-type trailer is intended for a user to engage in everyday activities such as sleeping and cooking, the trailer is equipped with home appliances, a bathroom, a sink, and a bedroom for sleeping as is provided in a typical home.

In particular, an air conditioner for heating and cooling may be essentially installed in the mobile-home-type trailer to heat or cool the interior depending on the outside temperature.

Typically, an air conditioner is an apparatus that has a refrigeration cycle device, including a compressor, an outdoor heat exchanger, a capillary tube, and a heat exchanger, installed inside so as to appropriately discharge cold air formed in an evaporator and warm air generated in the outdoor heat exchanger according to the indoor conditions, thereby maintaining a comfortable indoor atmosphere.

An air conditioner is divided into an integrated air conditioner in which a refrigeration cycle device is installed in one body, usually mounted on a window frame, and an indoor part faces inward and an outdoor part faces outward, relative to the window frame, and a split-type air conditioner in which indoor and outdoor units are separated and installed indoors and outdoors respectively. Here, the outdoor unit of the split-type air conditioner usually includes a compressor that generates a lot of noise, so the outdoor unit is installed outdoors if possible.

Even in the case of a conventional mobile-home-type trailer, when applying an air conditioner, an outdoor unit is installed outside. For example, "OUTDOOR UNIT SUPPORTER INSTALLED ON REAR DOOR FOR CAMPING CAR," disclosed in Korean patent No. 10-2391763 proposes an outdoor unit supporter that minimizes external impact and air resistance caused by wind during driving by installing an outdoor unit on a rear door side of a camping car.

However, when installing an outdoor unit outside the mobile-home-type trailer, there is a problem of damaging the beauty of the overall appearance of the mobile-home-type trailer.

In addition, even if the outdoor unit is firmly fixed to the outdoor unit supporter disclosed in the Korean Patent described above, vibrations generated during driving of a vehicle is may have a negative effect on the fixation of the outdoor unit. In addition, there is a risk that the inside of the outdoor unit may be contaminated and malfunctioned due to foreign substances flying from the surroundings during the driving of a vehicle, and there is also a risk of damage due to impact.

As another example of a conventional mobile-home-type trailer, "AIR CONDITIONER FOR CAMPER CAR" disclosed in Korean Patent No. 10-2083740 discloses a technology for installing an outdoor unit in space between the lower axles of a camping car and securing a space that can accommodate a compressor and an expansion valve, etc., near the outdoor unit.

However, in the case of the technology disclosed in Korean Patent No. 10-2083740 described above, the outdoor unit is installed on the lower bottom surface of the camper car, and thus to repair the outdoor unit, the body of the camper car is required to be lifted, so there is a disadvantage in that it is difficult to repair the camper car. In addition, there is a risk of damage due to foreign objects such as gravel flying up from the road while the camper car is driving, and there is also a risk of malfunction due to the introduction of the foreign objects.

As another example of a conventional mobile-home-type trailer, AIR CONDITIONER FOR CAMPING CAR HAVING VARIABLE STRUCTURE disclosed in Korean Patent Application Publication No. 10-2022-0076955 discloses an air conditioner for a camping car in which the positions of a compressor, a condenser, and a dryer can be changed so as to utilize the interior and exterior spaces of a camping car.

However, the technology disclosed in Korean Patent Application Publication No. 10-2022-0076955 described above has a disadvantage in that a compressor and a condenser of sizes suitable for a space having a variable structure are required. In addition, there is a risk of damage to a refrigerant pipe as the refrigerant pipe is bent and exposed to the outside, and there is a problem that it is difficult for a worker to access the air conditioner for repair.

### Disclosure

### Technical Problem

An objective of the present disclosure is to provide a mobile-home-type trailer in which an air conditioner is not exposed to the outside.

Another objective of the present disclosure is to provide a mobile-home-type trailer that ensures accessibility for a worker necessary to repair or replace an air conditioner.

Another objective of the present disclosure is to provide a mobile-home-type trailer in which an air conditioner is separable from a residential space without exposing the air conditioner to the outside.

Another objective of the present disclosure is to provide a mobile-home-type trailer that ensures smooth air circulation according to the operation of an air conditioner while the air conditioner is installed inside the mobile-home-type trailer.

Another objective of the present disclosure is to provide a mobile-home-type trailer that can increase space efficiency without an air supply duct of an air conditioner being exposed to a residential space inside the mobile-home-type trailer.

Another objective of the present disclosure is to provide a mobile-home-type trailer in which the impact of noise caused by the operation of an air conditioner on a residential space is minimized.

### Technical Solution

In a mobile-home-type trailer according to an embodiment of the present disclosure, an air conditioner may be installed in a trailer body without being exposed to the outside.

The trailer body according to the embodiment of the present disclosure may include a residential space and a machine room. In an embodiment, the machine room may be formed at a position biased to one side in the trailer body.

The air conditioner according to the embodiment of the present disclosure may be installed inside the machine room without being exposed to the outside of the trailer body.

In an embodiment, the machine room may be formed at a position biased forward in a towing direction in which the trailer body is towed. Additionally, the residential space may extend from the machine room in a direction opposite to the towing direction.

The air conditioner according to the present disclosure may include an indoor unit and an outdoor unit. The indoor unit may be installed in an upper part of the machine room. Additionally, the outdoor unit may be installed in the machine room so as to be positioned below the indoor unit.

In an embodiment, the indoor unit may be installed on a rear wall surface among inner wall surfaces of the machine room. Additionally, the outdoor unit may be disposed below the indoor unit by being spaced apart forward from the rear wall surface of the machine room.

In an embodiment, a communication grille that communicates with the outside may be formed in at least one area of a lower part of a front wall surface among the inner wall surfaces of the machine room inside the machine room. In addition, a lower communication opening that communicates with the outside of the trailer body may be formed on a bottom surface of the machine room. According to the above configuration, external air introduced through the lower communication opening according to an operation of the outdoor unit may flow to the outside through the communication grille after passing through the outdoor unit.

Here, the lower communication opening may be formed at a lower part of a separation space between the outdoor unit and the rear wall surface of the machine room.

The mobile-home-type trailer according to the embodiment of the present disclosure may include a flow blocking plate. The flow blocking plate may protrude from the rear wall surface of the machine room toward the front wall surface thereof at a position between the indoor unit and the outdoor unit in a vertical direction. In addition, the flow blocking plate may block air flowing according to an operation of the outdoor unit from flowing to the indoor unit.

The mobile-home-type trailer according to the embodiment of the present disclosure may include an air supply duct and an air intake duct.

In an embodiment, the air supply duct can discharge air discharged from the indoor unit into the residential space. In addition, the air intake duct may draw air from the residential space and deliver the air to the indoor unit.

The mobile-home-type trailer according to the embodiment of the present disclosure may include an inter-floor partition structure. The inter-floor partition structure may divide the residential space into a first floor space and a mezzanine space.

In an embodiment, the air supply duct may extend along the inter-floor partition structure from the indoor unit while embedded within the inter-floor partition structure. In addition, the air supply duct may discharge air from the indoor unit into the residential space at the rear end of the inter-floor partition structure.

The air intake duct according to an embodiment of the present disclosure may communicate the indoor unit with the mezzanine space and draw in air from the mezzanine space.

In an embodiment, the inter-floor partition structure may extend rearward from the machine room and divide the residential space into the first floor space and the mezzanine space.

The air supply duct according to an embodiment of the present disclosure may include an embedded air supply duct and a connecting air supply duct. The embedded air supply duct may extend rearward while embedded within the inter-floor partition structure. In addition, the connecting air supply duct may connect the indoor unit and the embedded air supply duct along a lateral direction relative to the towing direction.

The embedded air supply duct according to an embodiment of the present disclosure may include a first embedded duct and a second embedded duct. The first embedded duct may be connected to the connecting air supply duct. In addition, the second embedded duct may have a cross-sectional area increasing gradually rearward.

In an embodiment, the second embedded duct may have a plurality of guide vanes formed along a rear thereof to be laterally spaced apart from each other. The plurality of guide vanes may guide the flow of air within the second embedded duct.

In an embodiment, the plurality of guide vanes may be laterally spaced apart from each other so as to have a fan-like shape rearward.

In an embodiment, the inter-floor partition structure may form a ceiling of the machine room and extend rearward from the machine room.

Here, an air conditioning inlet that communicates the mezzanine space with the machine room may be formed in the ceiling of the machine room. In addition, the air intake duct may communicate the air conditioning inlet with the indoor unit so as to draw in air from the mezzanine space through the air conditioning inlet.

The mobile-home-type trailer according to the embodiment of the present disclosure may include a residential partition structure and an exhaust unit.

The residential partition structure according to an embodiment of the present disclosure may divide the first floor space below the inter-floor partition structure into a first lower space and a second lower space in a lateral direction relative to the towing direction.

The exhaust unit according to an embodiment of the present disclosure may communicate with at least one of the first lower space and the second lower space and exhaust air from the first lower space or the second lower space to the machine room.

In an embodiment, the exhaust unit may include an exhaust intake part, an exhaust discharge part, and an exhaust duct.

The exhaust intake part may communicate with at least one of the first lower space and the second lower space. In addition, the exhaust discharge part may communicate with the machine room. In addition, the exhaust duct may connect the exhaust intake part with the exhaust discharge part and may be installed with at least one area thereof embedded in the inter-floor partition structure.

In an embodiment, the exhaust intake part may be exposed downward from the inter-floor partition structure and may draw in air from the first lower space or the second lower space.

The mobile-home-type trailer according to the embodiment of the present disclosure may include a machine room partition structure, a stair partition wall, and stairs.

In an embodiment, the machine room partition structure may separate the machine room and the residential space. In addition, the stair partition wall may be spaced apart rearward from the machine room partition structure. Here, the stairs may be installed between the machine room partition structure and the stair partition wall to ensure movement to the mezzanine space.

In addition, the residential partition structure may extend rearward from the stair partition wall.

In an embodiment, the exhaust duct may extend from the exhaust intake part toward the machine room while embedded in the inter-floor partition structure, and may be connected to the machine room through the lower space of the stairs.

In an embodiment, a kitchen structure may be installed on a first side of the first lower space and the second lower space. In addition, a bathroom structure may be installed on a second side of the first lower space and the second lower space. This allows a center of gravity of the trailer body to be positioned forward from a center in the towing direction.

### Advantageous Effects

The mobile-home-type trailer according to the present disclosure may have one or more of the following effects.

First, the air conditioner may be installed inside the machine room without being exposed to the outside, thereby minimizing the risk of breakdown or damage due to external foreign substances during movement or use.

Second, even though the air conditioner is installed inside the machine room, the effect of improving accessibility for a worker for repairs, etc. may be provided.

Third, the air conditioner may be disposed inside the machine room, thereby providing the effect of not affecting the exterior design of the trailer body.

Fourth, even if the air conditioner is installed inside the trailer body, the air conditioner may be separated from the residential space, thereby minimizing the impact of noise resulting from the operation of the air conditioner.

Fifth, air provided from the air conditioner may be discharged at the end of a mezzanine area and air from the residential space may be drawn in at the front edge of the mezzanine area, thereby ensuring smooth air circulation according to the operation of the air conditioner.

Sixth, the air supply duct and the air intake duct for air circulation of the air conditioner may be embedded in the internal structures of the machine room and the trailer body, thereby minimizing impact on the use of interior space and design.

Seventh, the machine room in which the air conditioner is installed may be arranged so that the position of the machine room is biased forward in the towing direction, and a bathroom structure and a kitchen structure may be arranged to be biased forward to be adjacent to the machine room, so that the center of gravity may be located on a front side from the center of the towing direction. Through this, during engaging with a vehicle for towing or during driving after towing, a load may be applied forward in the towing direction, thereby facilitating engaging with the vehicle and ensuring the stable coupling of an engaging portion during driving.

### Description of Drawings

FIG. 1 is a front perspective view of a mobile-home-type trailer according to an embodiment of the present disclosure.
FIG. 2 is a rear perspective view of the mobile-home-type trailer according to an embodiment of the present disclosure.
FIG. 3 is a drawing illustrating an example of a moving method of the mobile-home-type trailer according to an embodiment of the present disclosure.
FIG. 4 is a drawing illustrating the internal configuration of a trailer body of the mobile-home-type trailer according to an embodiment of the present disclosure.
FIG. 5 is a plan view illustrating the internal configuration of the mobile-home-type trailer according to an embodiment of the present disclosure.
FIG. 6 is a drawing of a machine room of the mobile-home-type trailer according to an embodiment of the present disclosure when viewed from the front.
FIG. 7 is a drawing showing a portion of a cross-section taken along line VII-VII of FIG. 4.
FIG. 8 is a drawing illustrating an air supply duct 330 of the mobile-home-type trailer according to an embodiment of the present disclosure.
FIG. 9 is a drawing showing the flow of air according to the operation of an air conditioner of the mobile-home-type trailer according to an embodiment of the present disclosure.
FIG. 10 is a drawing showing an example of the configuration of an exhaust unit of the mobile-home-type trailer according to an embodiment of the present disclosure.
FIG. 11 is a drawing showing an example of a frame structure of the trailer body according to an embodiment of the present disclosure.
FIG. 12 illustrates a side view of the front and rear sides of the mobile-home-type trailer according to an embodiment of the present disclosure.
FIG. 13 is a bottom view of the lower side of the mobile-home-type trailer according to an embodiment of the present disclosure.
FIG. 14 is a side view of the lower side of the mobile-home-type trailer according to an embodiment of the present disclosure.
FIG. 15 is a drawing illustrating the water supply structure of the mobile-home-type trailer according to an embodiment of the present disclosure.
FIGS. 16 to 18 are drawings illustrating the wastewater or sewage treatment structure of the mobile-home-type trailer according to an embodiment of the present disclosure.

### Best Mode

In a mobile-home-type trailer according to an embodiment of the present disclosure, an air conditioner may be installed in a trailer body without being exposed to the outside. The trailer body according to the embodiment of the present disclosure may include a residential space and a machine room. In an embodiment, the machine room may be formed at a position biased to one side in the trailer body.

### Mode for Invention

The advantages and features of the present disclosure and the methods of achieving them will become apparent with reference to the embodiments described below in detail together with the attached drawings. However, the present disclosure is not limited to the embodiments disclosed below and may be implemented in various different forms, and the present embodiments are provided only to ensure that the disclosure of the present disclosure is complete and to fully inform those skilled in the art to which the present disclosure belongs of the scope of the present disclosure, and the present disclosure is defined only by the scope of the claims. Like reference numerals refer to like elements throughout the specification.

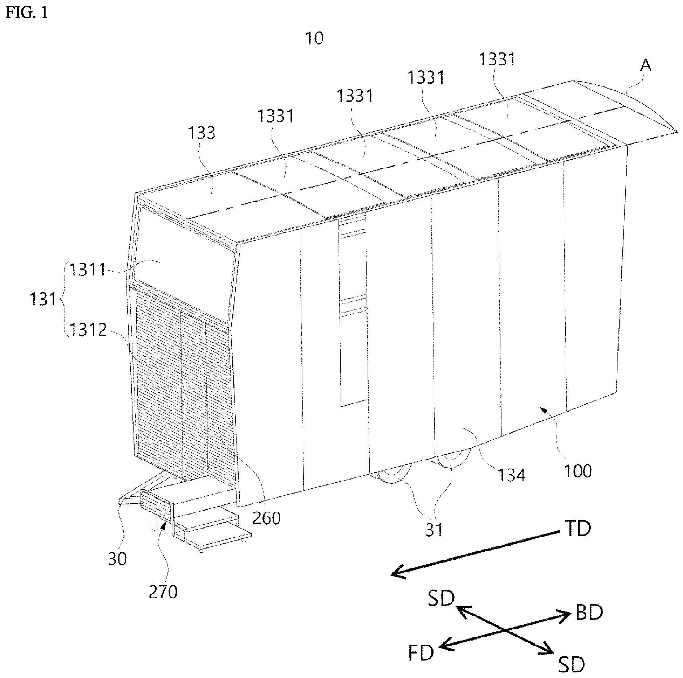

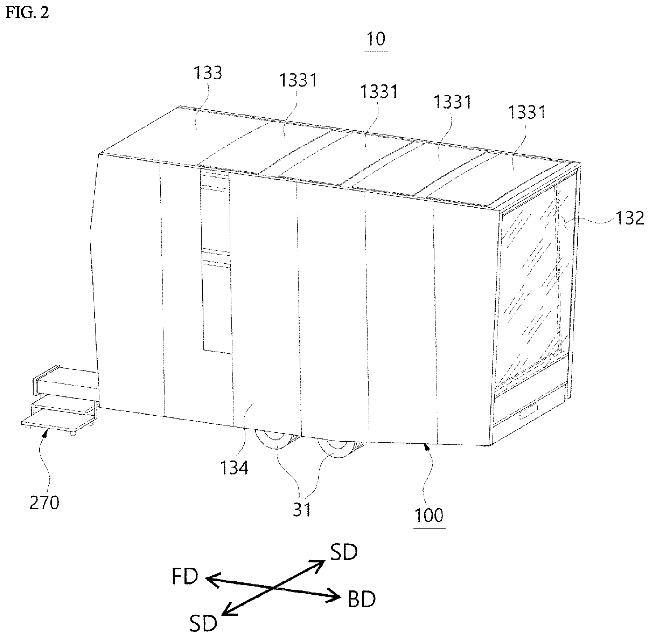

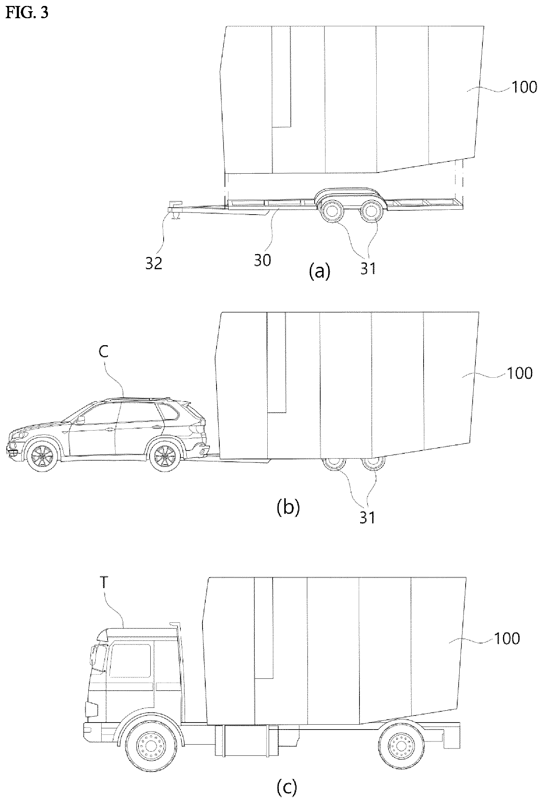

FIG. 1 is a front (FD) perspective view of a mobile-home-type trailer 10 according to an embodiment of the present disclosure, FIG. 2 is a rear (BD) perspective view of the mobile-home-type trailer 10 according to the embodiment of the present disclosure, and FIG. 3 is a drawing illustrating an example of a moving method of the mobile-home-type trailer 10 according to the embodiment of the present disclosure.

Here, in an embodiment of the present disclosure, when a mobile-home-type trailer 10 is towed by using a vehicle as illustrated in FIG. 3(b), a side to which the mobile-home-type trailer 10 is towed relative to a towing direction (TD) may be defined as a front (FD), and a side in a direction opposite to the towing direction (TD) may be defined as a rear (BD). In addition, when the ground is considered as a coordinate plane, a direction perpendicular to the towing direction (TD) may be defined as a lateral direction (SD).

The mobile-home-type trailer 10 according to the embodiment of the present disclosure may include a trailer body 100. In an embodiment, the trailer body 100 may constitute the entire exterior of the mobile-home-type trailer 10 and may include a machine room 430 and a residential space 400 inside.

Referring to FIG. 3, the trailer body 100 according to an embodiment of the present disclosure may be moved while being towed by a vehicle C, as shown in FIG. 3(b), or moved while being fixed to a cargo compartment of a vehicle C, such as a truck T, as shown in FIG. 3(c).

The mobile-home-type trailer 10 according to the embodiment of the present disclosure may include a moving tray 30, as illustrated in FIG. 3(a). In an embodiment, the moving tray 30 may include a movable wheel 31 and a towing module 32.

The trailer body 100 may be fixed to the moving tray 30 while being seated thereon. The towing module 32 may formed at a protruding position of the moving tray 30 in the front direction (FD) and may be coupled to a towing device of the vehicle C.

In an embodiment, the movable wheels 31 may include a pair of movable wheels installed on each of left and right sides and may be installed on the moving tray 30 in a front-back direction, so that four movable wheels 31 may be installed on the moving tray 30. In an embodiment, a dual-wheel-tire structure may be applied to one movable wheel 31.

According to the above configuration, the mobile-home-type trailer 10 may be moved by being towed by the vehicle C with the trailer body 100 seated on the moving tray 30, or the trailer body 100 may be moved by the vehicle C such as the truck T being fixed to the cargo compartment.

Although the mobile-home-type trailer 10 is defined and described in this specification, it may also be defined using names such as "camping trailer", "caravan", etc., and the technical idea of the present disclosure is not limited to these names.

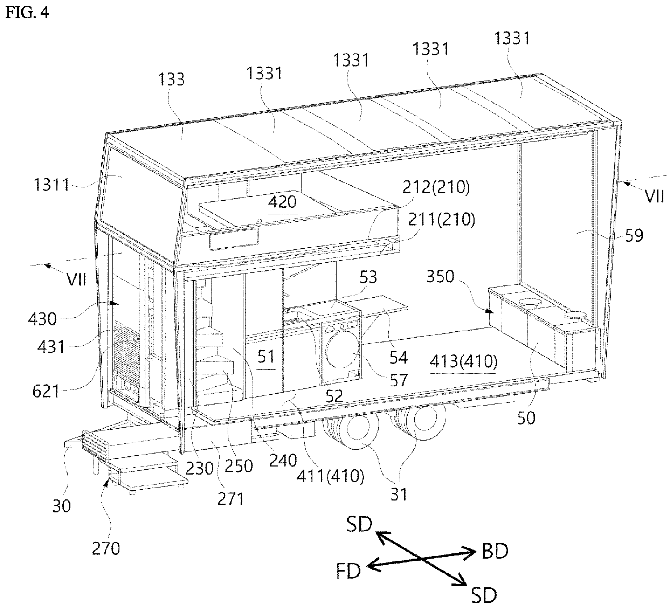

FIG. 4 is a drawing illustrating the internal configuration of the trailer body 100 of the mobile-home-type trailer 10 according to the embodiment of the present disclosure, and

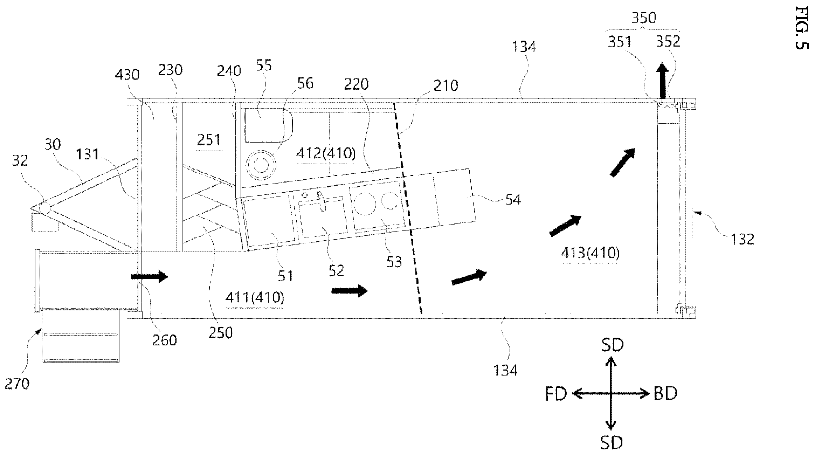

FIG. 5 is a plan view illustrating the internal configuration of the mobile-home-type trailer 10 according to an embodiment of the present disclosure.

The trailer body 100 according to an embodiment of the present disclosure may include the machine room 430 and the residential space 400 inside as described above.

The machine room 430 according to the present disclosure may be formed at a position biased to one side in the trailer body 100. In an embodiment, the machine room 430 may be formed at a position biased in a forward direction (FD) in the trailer body 100. In addition, the residential space 400 may extend from the machine room 430 toward the rear (BD).

The mobile-home-type trailer 10 according to the embodiment of the present disclosure may include an air conditioner 300. In the embodiment of the present disclosure, the air conditioner 300 may be installed inside the machine room 430 so as not to be exposed to the outside of the trailer body 100.

According to the above configuration, the air conditioner 300 may be accommodated inside the machine room 430 separated from the residential space 400, so that the problem of destroying the appearance of the trailer body 100 when the air conditioner 300 is installed outside the trailer body 100 may be solved.

In addition, since the air conditioner 300 is not exposed to the outside of the trailer body 100, the air conditioner 300 may be prevented from being contaminated, malfunctioning, or being damaged due to foreign substances, etc. during the process of being moved by the vehicle C, etc.

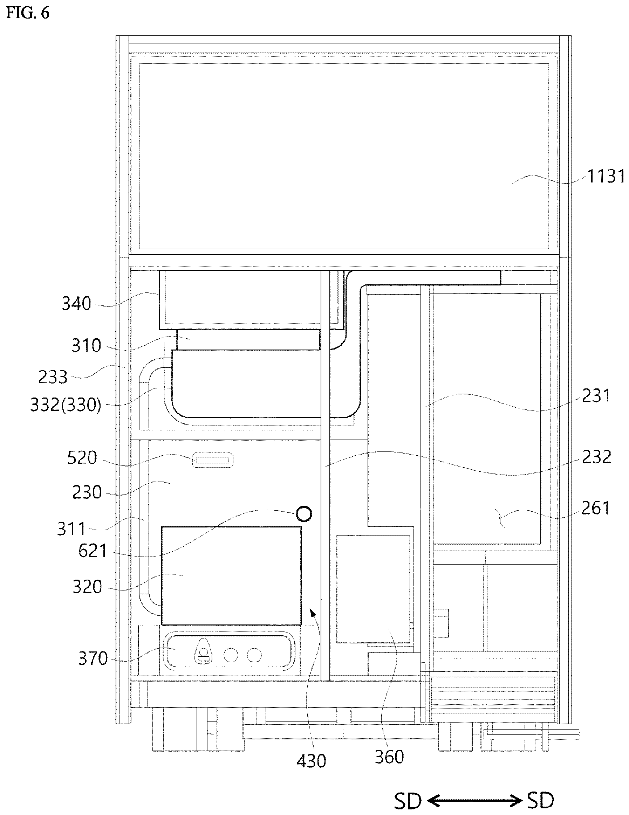

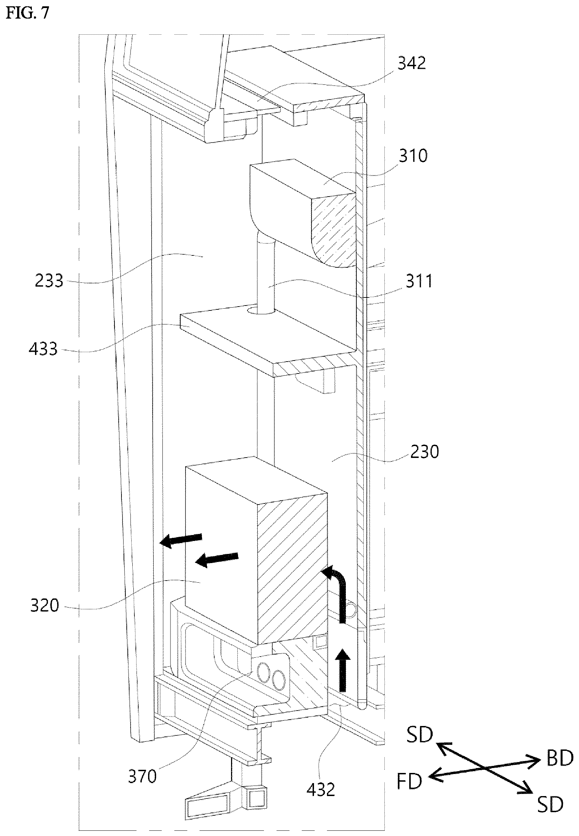

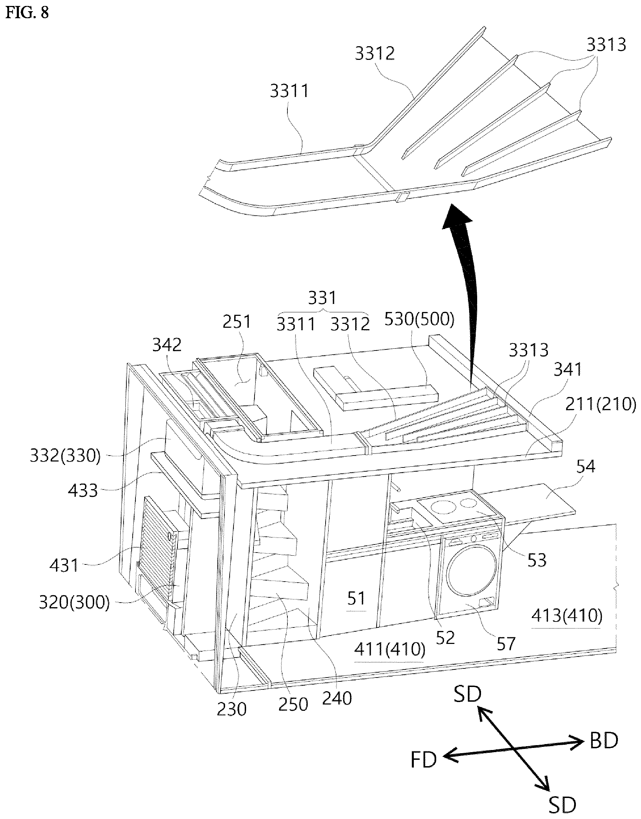

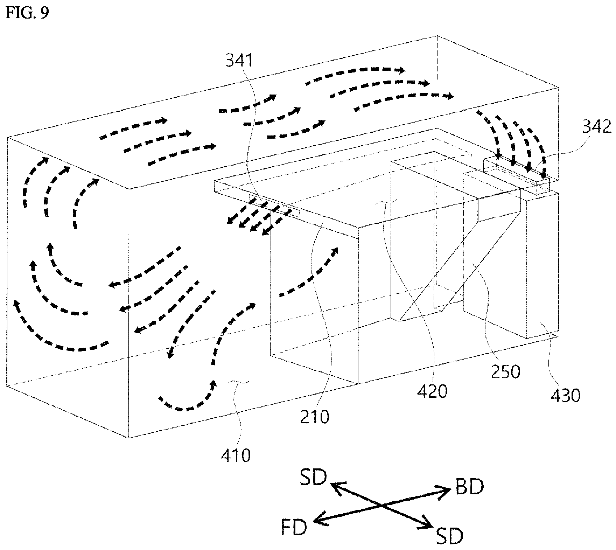

Hereinafter, an example of the air conditioner 300 according to an embodiment of the present disclosure will be described in detail with reference to FIGS. 6 to 9. FIG. 6 is a drawing of the machine room 430 of the mobile-home-type trailer 10 according to the embodiment of the present disclosure when viewed from the front, FIG. 7 is a drawing showing a portion of a cross-section taken along line VII-VII of FIG. 4, FIG. 8 is a drawing illustrating an air supply duct 330 of the mobile-home-type trailer 10 according to the embodiment of the present disclosure, and FIG. 9 is a drawing showing the flow of air according to the operation of the air conditioner 300 of the mobile-home-type trailer 10 according to the embodiment of the present disclosure.

The air conditioner 300 according to the present disclosure may include an indoor unit 310 and an outdoor unit 320 as an example. That is, the air conditioner 300 having the indoor unit 310 and the outdoor unit 320 separated from each other is applied as an example, but an air conditioner 300 in which the indoor unit 310 and the outdoor unit 320 are integrally configured may be applied.

In an embodiment, the indoor unit 310 may be installed on the upper part of the machine room 430. On the upper part of the machine room 430, the indoor unit 310 may be connected to an air supply duct 330 and an air intake duct 340 to be described later. In addition, the outdoor unit 320 may be installed below the indoor unit 310 inside the machine room 430.

In an embodiment of the present disclosure, as an example, the indoor unit 310 may be installed on a rear (BD) wall surface 230 among inner wall surfaces of the machine room 430. Here, the rear (BD) wall surface 230 of the machine room 430 may be constituted by a machine room partition structure 230 to be described later, and this will be described in detail later.

In addition, the outdoor unit 320, for example, may be disposed below the indoor unit 310 while being spaced apart from the rear (BD) wall surface 230 of the machine room 430 in the forward direction (FD).

In an embodiment, as shown in FIG. 4, the communication grille 431 that communicates with the outside may be formed in at least one area of a lower part of a front (FD) wall surface 234 among the inner wall surfaces of the machine room 430. In addition, a lower communication opening 432 that communicates with the outside of the trailer body 100 may be formed on a bottom surface of the machine room 430.

Through this, as illustrated in FIG. 7, external air introduced through the lower communication opening 432 according to an operation of the outdoor unit 320 may flow to the outside through the communication grille 431 after passing through the outdoor unit 320, thereby enabling heat exchange with the outdoor unit 320.

Here, the lower communication opening 432 may be formed at a lower part of a separation space between the outdoor unit 320 and the rear (BD) wall surface 230 of the machine room 430, and external air introduced through the lower communication opening 432 may flow into the outdoor unit 320 while flowing along the separation space between the outdoor unit 320 and the rear (BD) wall surface 230 of the machine room 430.

Meanwhile, the mobile-home-type trailer 10 according to the embodiment of the present disclosure may include the flow blocking plate 433.

The flow blocking plate 433 according to the embodiment of the present disclosure may be formed to protrude from the rear (BD) wall surface 230 of the machine room 430 toward the front (FD) wall surface 234 thereof at a position between the indoor unit 310 and the outdoor unit 320 in a vertical direction. In addition, the flow blocking plate 433 may block air flowing according to the operation of the outdoor unit 320 from flowing to the indoor unit 310.

For example, when the indoor unit 310 according to the embodiment of the present disclosure operates to supply cold air to the residential space 400, the heat of the outdoor unit 320 may be blocked from flowing to the indoor unit 310, thereby increasing the efficiency of the indoor unit 310. In addition, external air introduced through the lower communication opening 432 may be blocked from moving upwards and flow more easily to the outdoor unit 320, thereby increasing the heat exchange efficiency of the outdoor unit 320.

In the embodiment of the present disclosure, the flow blocking plate 433 may be connected to both the rear (BD) wall surface 230 of the machine room 430 and opposite lateral (SD) wall surfaces 233, and may be maintained to be spaced apart from the front (FD) wall surface 234.

In an embodiment, the front (FD) wall surface 234 of the machine room 430 may be installed to be removable from the machine room 430. As described above, the communication grille 431 may be formed on the lower side of the front (FD) wall surface 234 of the machine room 430, and the front (FD) wall surface 234, which is removable, may be formed on the upper side thereof.

Through this, when the air conditioner 300, such as the indoor unit 310 or the outdoor unit 320, breaks down or needs to be replaced, repair or replacement may be made after removing the front (FD) wall surface 234 and the communication grille 431 of the machine room 430, ensuring accessibility for a worker.

Meanwhile, the mobile-home-type trailer 10 according to the embodiment of the present disclosure may include an inter-floor partition structure 210.

The inter-floor partition structure 210 according to the embodiment of the present disclosure divides the residential space 400 formed in the trailer body 100 into a first floor space 410 and a mezzanine space 420.

Here, an intermediate floor may also be defined as a duplex, mezzanine, etc. In the present disclosure, as illustrated in FIG. 4, a portion of the entire first floor space 410 may form a second floor space, and the mezzanine space 420 may be defined as a structure in which the first floor space 410 and the mezzanine space 420 are connected via stairs 250, and the technical idea of the present disclosure is not limited to the name.

The mobile-home-type trailer 10 according to the embodiment of the present disclosure may include the air supply duct 330 and the air intake duct 340.

In an embodiment, the air supply duct 330 may discharge air discharged from the indoor unit 310 of the air conditioner 300 into the residential space 400. Additionally, the air intake duct 340 may draw air from the residential space 400 and deliver the air to the indoor unit 310 of the air conditioner 300.

In an embodiment of the present disclosure, the air supply duct 330 may extend along the inter-floor partition structure 210 from the indoor unit 310 while embedded within the inter-floor partition structure 210. In addition, the air supply duct 330, for example, may discharge air discharged from the indoor unit 310 to the residential space 400 at an end of the inter-floor partition structure 210 opposite to the machine room 430, that is, a rear (BD) end of the inter-floor partition structure.

In an embodiment of the present disclosure, the air intake duct 340 may communicate the indoor unit 310 with the mezzanine space 420. Through this, the air intake duct 340 may draw air from the mezzanine space 420 and deliver the air to the indoor unit 310.

According to the above configuration, the air supply duct 330 for moving air discharged from the air conditioner 300 to the residential space 400 may be installed to be embedded in the inter-floor partition structure dividing the first floor space 410 and the mezzanine space 420, so that the air supply duct 330 may not be exposed to the inside of the residential space 400. Accordingly, the interior design of the residential space 400 may not be harmed, and the utilization efficiency of the residential space 400 may increase.

As explained above, the machine room 430 may be formed at a position biased toward the front (FD) of the trailer body 100, and the residential space 400 may be formed at the rear (BD) of the machine room 430.

Here, the inter-floor partition structure 210 according to an embodiment of the present disclosure may extend from the machine room 430 to the rear (BD) side to divide the residential space 400 into the first floor space 410 and the mezzanine space 420. Accordingly, the air supply duct 330, which is embedded in the inter-floor partition structure 210 and extends toward the rear (BD), may extend from the machine room 430 to the rear (BD) along the inter-floor partition structure 210.

Meanwhile, the air supply duct 330 according to an embodiment of the present disclosure may include an embedded air supply duct 331 and a connecting air supply duct 332.

The embedded air supply duct 331 according to an embodiment of the present disclosure may extend toward the rear (BD) while embedded inside the inter-floor partition structure 210. In addition, the connecting air supply duct 332 may connect the air conditioner 300, for example, the indoor unit 310 and the embedded air supply duct 331 along the lateral direction (SD).

In an embodiment, as illustrated in FIG. 6, the connecting air supply duct 332 may be located below the indoor unit 310 to be connected to the indoor unit 310 and may be bent upward and extend in the lateral direction (SD) to be connected to the embedded air supply duct 331.

FIG. 8 is a drawing showing the upper area of the inter-floor partition structure 210, with the bottom of the mezzanine space 420 removed.

Referring to FIG. 8, the embedded air supply duct 331 according to an embodiment of the present disclosure may include a first embedded duct 3311 and a second embedded duct 3312.

A first side of the first embedded duct 3311 may be connected to the connecting air supply duct 332, and a second side thereof may be connected to the second embedded duct 3312. Here, the first embedded duct 3311 may be provided to have a smaller cross-sectional area than the second embedded duct 3312. Through this, a connecting space that connects the first floor space 410 and the mezzanine space 420 at the upper side of the stairs 250 may be formed, and thus the first embedded duct 3311 may be disposed at one side of the connecting space.

The second embedded duct 3312 according to an embodiment of the present disclosure may have a first side connected to the first embedded duct 3311 and a second side connected to an air conditioning outlet 341 formed on the rear (BD) end of the inter-floor partition structure 210.

In an embodiment, the second embedded duct 3312 may have a cross-sectional area increasing gradually toward the rear (BD) as shown in the enlarged drawing of FIG. 8. In addition, the air conditioning outlet 341 may be formed on the rear (BD) end of the inter-floor partition structure 210 to correspond to the cross-sectional area of the second embedded duct 3312.

Through this configuration, air flowing from the outdoor unit 320 through the connecting air supply duct 332 and the first embedded duct 3311 may be discharged through the air conditioning outlet 341 in a widely spread state in the lateral direction (SD) in the second embedded duct 3312, thereby enabling discharge of the air into the residential space 400 over a wide area.

Here, in an embodiment of the present disclosure, a plurality of guide vanes 3313 may be formed in the second embedded duct 3312. In an embodiment, the plurality of guide vanes 3313 may be formed along a front (FD) to be spaced apart from each other in the lateral direction (SD).

In addition, as illustrated in FIG. 8, the plurality of guide vanes 3313 may be formed to be spaced apart from each other in the lateral direction (SD) so as to have a fan-like shape toward the rear (BD). Through this, the flow of air flowing from the first embedded duct 3311 to the second embedded duct 3312 may not be concentrated on one side of the lateral direction (SD), but branched out and flow in the lateral direction (SD) according to the guide of each of the guide vanes 3313, thereby enabling more even discharge in the lateral direction (SD) through the air conditioning outlet 341.

Meanwhile, as shown in FIG. 8, the inter-floor partition structure 210 according to an embodiment of the present disclosure may form the ceiling of the machine room 430 and extend to the rear (BD) of the machine room 430.

In addition, an air conditioning inlet 342 that communicate the mezzanine space 420 with the machine room 430 may be formed on the ceiling of the machine room 430, that is, on the side of the inter-floor partition structure 210, which is the upper side of the machine room 430. Here, the air intake duct 340 may communicate the air conditioning inlet 342 formed on the ceiling of the machine room 430 with the indoor unit 310 of the air conditioner 300 so as to draw in air from the mezzanine space 420 to the indoor unit 310 through the air conditioning inlet 342.

According to the configuration as described above, the flow of air during the operation of the air conditioner 300 of the mobile-home-type trailer 10 according to the embodiment of the present disclosure will be described with reference to FIG. 9.

When the air conditioner 300 according to an embodiment of the present disclosure is operated, air discharged from the outdoor unit 320 may pass through the connecting air supply duct 332, the first embedded duct 3311, and the second embedded duct 3312, and may be discharged to the residential space 400 through the air conditioning outlet 341 formed on the rear (BD) end of the inter-floor partition structure 210.

Here, since the inter-floor partition structure is a structure forming the first floor space 410 and the mezzanine space 420, as illustrated in FIG. 9, the inter-floor partition structure may discharge air toward the residential space 400 from a middle area in the vertical direction of the residential space 400.

In addition, air discharged through the air conditioning outlet 341 may circulate through the residential space 400, and the outdoor unit 320 may draw in the air through the air conditioning inlet 342 formed on the front (FD) side of the mezzanine space 420, thereby generating an air flow as illustrated in FIG. 9.

Accordingly, both the first floor space 410 and the mezzanine space 420 may be heated or cooled evenly.

Meanwhile, as shown in FIG. 6, a terminal box 270 for connecting external power may be installed in the machine room 430. Additionally, the terminal box 270 and a distribution board 360 connected to a battery B, which will be described later, may be installed in the machine room 430.

Referring back to FIG. 5, the mobile-home-type trailer 10 according to the embodiment of the present disclosure may include a residential partition structure 220.

The residential partition structure 220 according to an embodiment of the present disclosure may divide the first floor space 410 located below the inter-floor partition structure 210 into a first lower space 411 and a second lower space 412. That is, the front (FD) side of the residential space 400 may be partitioned into the first floor space 410 and the mezzanine space 420 in a vertical direction by the inter-floor partition structure 210, and the first floor space 410 may be partitioned into the first lower space 411 and the second lower space 412 in the lateral direction (SD) by the residential partition structure 220.

For convenience of explanation, the first floor space 410 may divided into the first lower space 411, the second lower space 412, and a living room space 413 on the rear (BD) side. Here, it may be seen through FIG. 4 that the height of the living room space 413 is formed higher than the heights of the first lower space 411 and the second lower space 412.

In an embodiment of the present disclosure, an entrance 261 and a kitchen space is formed may be formed in the first lower space 411. FIGS. 4 and 5 illustrate examples of kitchen structures, such as a refrigerator 51, a sink 52, cooking utensils 53, a folding table 54, and a washing machine 57, being arranged in the kitchen space. However, the type and arrangement of the installed home appliances or furniture are not limited thereto. In addition, for example, a bathroom structure, such as a bathroom and a lavatory, is formed in the second lower space 412. In an embodiment, a lavatory in which a washbasin 56 and a toilet 55 are installed is illustrated as an example.

According to this structure, the machine room 430 where the air conditioner 300 is installed may be arranged to be biased toward the front (FD) in the towing direction (TD), and a bathroom structure and a kitchen structure may be arranged to be biased to the front (FD) to be adjacent to the machine room 430, so that the center of gravity may be located at the front (FD) side from the center of the towing direction (TD).

Accordingly, during engaging with the vehicle C for towing or during driving after towing, a load may be applied to the front (FD) in the towing direction (TD), thereby facilitating engaging with the vehicle C and ensuring stable connection of an engaging portion during driving.

Meanwhile, the mobile-home-type trailer 10 according to the embodiment of the present disclosure may include an exhaust unit 500 as an example.

In an embodiment of the present disclosure, the exhaust unit 500 may communicate with at least one of the first lower space 411 and the second lower space 412 to exhaust air from the first lower space 411 and/or the second lower space 412 to the machine room 430.

In an embodiment of the present disclosure, the cooking utensils 53 may be installed in the first lower space 411, and the bathroom and the lavatory may be installed in the second lower space 412. In the present disclosure, for example, the exhaust unit 500 may exhaust air from the upper side of the cooking utensils 53 and the upper side of the bathroom and lavatory.

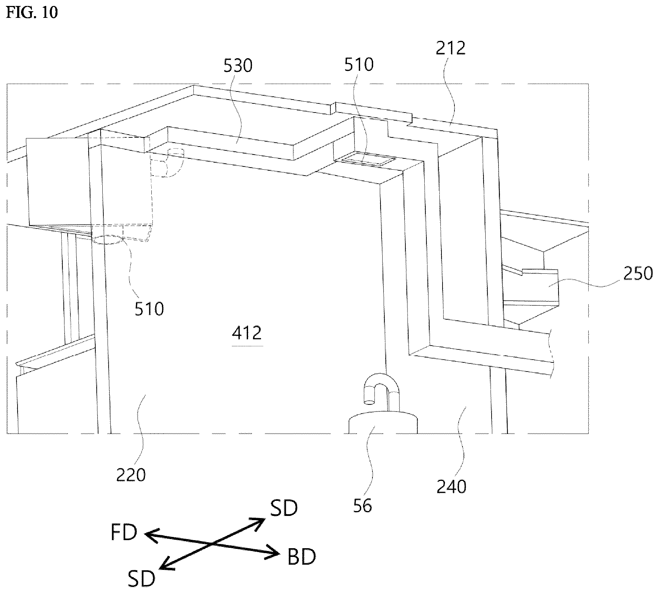

FIG. 10 is a drawing showing an example of the configuration of an exhaust unit 500 of the mobile-home-type trailer 10 according to an embodiment of the present disclosure.

Referring to FIG. 10, the exhaust unit 500 according to an embodiment of the present disclosure may include an exhaust intake part 510, an exhaust discharge part 520, and an exhaust duct 530.

The exhaust intake part 510 may communicate with at least one of the first lower space 411 and the second lower space 412. In an embodiment of the present disclosure, as illustrated in FIG. 10, the exhaust intake part 510 may be exposed downward at the upper side of a cooking appliance in the first lower space 411 and at the upper side of the bathroom and lavatory in the second lower space 412.

The exhaust discharge part 520 according to an embodiment of the present disclosure may be connected to the exhaust discharge part 520 through the exhaust duct 530 and discharge air from the first lower space 411 and the second lower space 412 drawn in through the exhaust discharge part 520 to the machine room 430. In FIG. 6, the exhaust discharge part 520 may communicate with the lower side of the flow blocking plate 433 of the machine room 430 as an example.

The exhaust duct 530 according to an embodiment of the present disclosure may connect the exhaust intake part 510 and the exhaust discharge part 520. In the embodiment of the present disclosure, the exhaust duct 530 may be installed with at least one area of the exhaust duct 530 embedded in the inter-floor partition structure.

FIG. 10 illustrates a state in which a lower plate of the inter-floor partition structure 210, that is, a lower plate constituting the ceiling of the first lower space 411 and the second lower space 412, is removed, with the exhaust duct embedded between a lower part of the upper plate of the inter-floor partition structure and the lower plate. FIG. 8 illustrates a state in which a portion of the exhaust duct 530 is exposed to the upper part of the lower plate of the inter-floor partition structure 210.

Here, the exhaust intake part 510 may have an exhaust fan (not shown) installed to draw in air from the first lower space 411 or the second lower space 412 and exhaust the air. In addition, the second lower space 412, i.e., the exhaust intake part 510 located on the upper side of the bathroom and the lavatory, may have an opening plate (not shown) installed to block air sucked in through the first lower space 411 from flowing into the second lower space 412. Here, the opening plate may be configured to open in conjunction with the operation of the exhaust fan to allow intake of air from the second lower space 412, and to close the exhaust intake part 510 when the operation of the exhaust fan stops.

Meanwhile, the mobile-home-type trailer 10 according to the embodiment of the present disclosure may include the machine room partition structure 230. The machine room partition structure 230 may separate the machine room 430 from the residential space 400, as shown in FIGS. 4, 5, and 8. Here, the wall surface of the machine room 430 side of the machine room partition structure 230 may constitute the rear (BD) wall surface 230 of the machine room 430 described above.

The mobile-home-type trailer 10 according to the embodiment of the present disclosure may include a stair partition wall 240. The stair partition wall 240 is disposed to be spaced apart from the machine room partition structure 230 toward the rear (BD).

In addition, the stairs 250 may be formed between the machine room partition structure 230 and the stair partition wall 240, ensuring movement to the first floor space 410 and the mezzanine space 420. Here, the inter-floor partition structure 210 on the upper side of the stairs 250 may have a connecting space formed by vertically penetrating therethrough, so that a user may go up the stairs 250 and move to the mezzanine space 420 through the connecting space.

Here, the residential partition structure 220, which partitions the first lower space 411 from the second lower space 412, may extend from the stair partition wall 240 toward the rear (BD), as shown in FIG. 5.

In addition, a space may be formed under the stairs 250. Here, the exhaust duct 530 may extend from the exhaust intake part 510 toward the front (FD) side, and then extend toward the machine room 430 while embedded in the inter-floor partition structure 210. For example, the exhaust duct 530 may be connected to the machine room 430 through the lower space of the stairs 250 from the inter-floor partition structure 210.

Accordingly, while only the exhaust intake part 510 constituting the exhaust unit 500 is exposed to the ceiling areas of the first lower space 411 and the second lower space 412, the exhaust duct 530 may extend to the inter-floor partition structure 210, the lower space of the stairs 250, and the machine room 430, so that the area of the exhaust structure exposed to the inside of the residential space 400 may be minimized.

Hereinafter, the framework and external structure of the trailer body 100 of the mobile-home-type trailer 10 according to an embodiment of the present disclosure will be described in detail.

As described above, the trailer body 100 may have the residential space 400 formed inside. In addition, the inter-floor partition structure 210 may divide the residential space 400 into the first floor space 410 and the mezzanine space 420 at the front (FD) side of the trailer body 100, as illustrated in FIGS. 4 and 5.

In an embodiment of the present disclosure, an entrance door 260 may be installed in the trailer body 100 to allow access to the outside through the first lower space 411.

Here, as illustrated in FIG. 5, the residential partition structure 220 according to an embodiment of the present disclosure may partition the first lower space 411 from the second lower space 412 so that the width of the first lower space 411 in the lateral direction (SD) increases gradually from the front (FD) toward the rear (BD).

In an embodiment, the entrance door 260 may be installed in the trailer body 100 so as to be opened toward the front (FD).

Through this, when a user opens the entrance door 260, enters the trailer body 100 through the first lower space 411, and looks into the interior of the residential space 400, the space may increase gradually inward, providing a sense of openness that makes the interior feel spacious.

In addition, even in the case of air circulation by the air conditioner 300 described above, the cross-sectional area of an air flow is variable, thereby ensuring a smoother air flow.

In addition, when the entrance door 260 is opened to ventilate inside air with outside air, the cross-sectional area of the space through which the outside air flowing in through the entrance door 260 flows may increase, thereby providing the effect of enabling smooth air circulation.

Here, the mobile-home-type trailer 10 according to the embodiment of the present disclosure may include a ventilation module 350. The ventilation module 350 may installed in an area on the rear (BD) side of the trailer body 100 and may ventilate air inside the residential space 400 to the outside.

In an embodiment, the ventilation module 350 may be positioned diagonally on the rear (BD) side with respect to the entrance door 260, as illustrated in FIGS. 4 and 5. Here, the ventilation module 350 may include, for example, a ventilation port 352 communicating with the outside and a ventilation fan 351 that ventilates the internal air from the residential space 400 to the outside through the ventilation port 352.

Here, the ventilation module 350 may be installed on one side of the lateral direction (SD) of a storage furniture 58 installed on the rear (BD) edge of the residential space 400 so as to minimize impact on an interior design.

With this configuration, when the entrance door 260 is opened, outside air flowing in through the entrance 261 may pass through the first lower space 411, flow diagonally through the living room space 413, and flow to the outside through the ventilation port 352 according to the operation of the ventilation fan 351, thereby enabling effective ventilation throughout the entire area of the residential space 400.

Meanwhile, the trailer body 100 according to an embodiment of the present disclosure may include a frame structure 110 and an exterior structure 130

The frame structure 110 may constitute the entire framework of the trailer body 100. In addition, the exterior structure 130 may be installed on the frame structure 110 to constitute the exterior of the trailer body 100. Here, the exterior structure 130 may include structures that form not only the outer surface of the trailer body 100, but also the interior wall surfaces, ceiling, bottom, etc. of the trailer body 100.

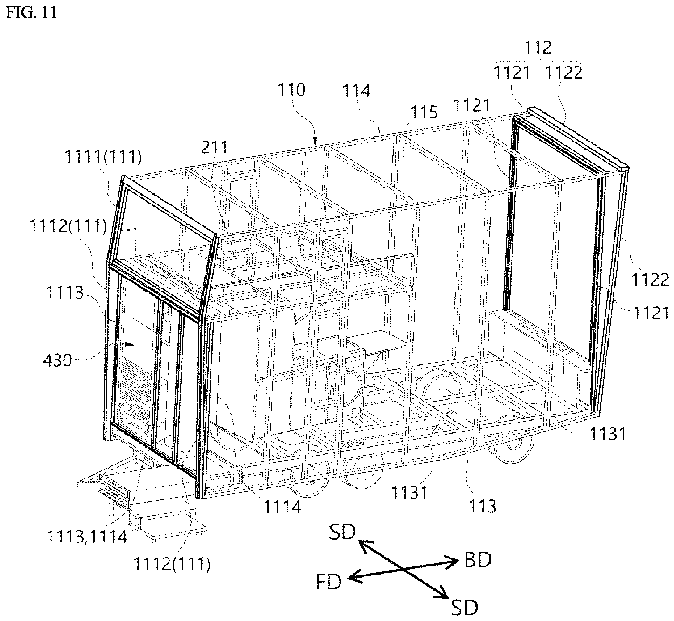

FIG. 11 is a drawing showing an example of the frame structure 110 of the trailer body 100 according to an embodiment of the present disclosure. The frame structure 110 may form the framework of the trailer body 100 by combining multiple frames connected in a front-rear direction, the lateral direction (SD), and an up-down direction, respectively.

As illustrated in FIG. 11, the frames constituting the frame structure 110 may be interconnected and some frames thereof may overlap each other to form a front frame 111, a rear frame 112, an inter-floor partition frame 211, etc.

The exterior structure 130 may include a front exterior structure 131. Here, the front exterior structure 131 may constitute the front (FD) exterior of the trailer body 100, as illustrated in FIG. 1. In an embodiment, the front exterior structure 131 may include a front upper structure and a front lower structure 1312 which are respectively arranged vertically.

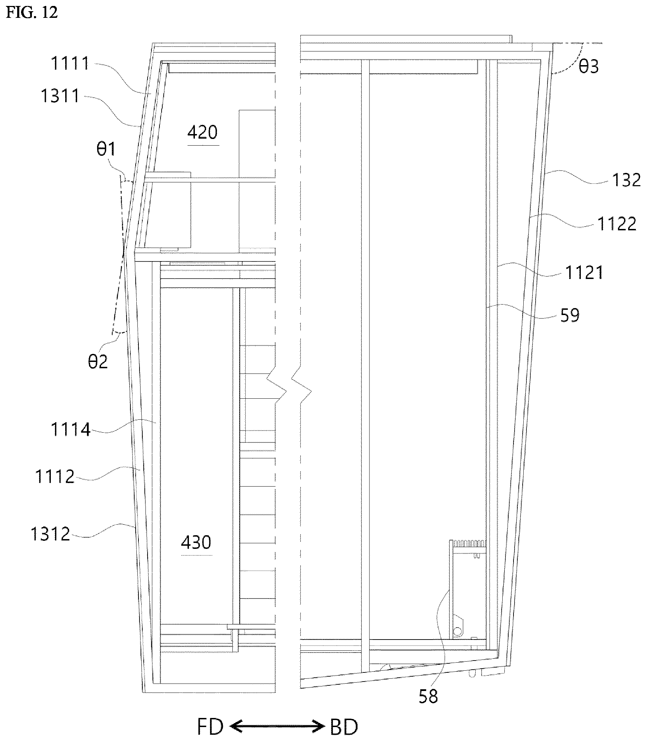

FIG. 12 illustrates a side view of the front (FD) side and the rear (BD) side of the mobile-home-type trailer 10 according to an embodiment of the present disclosure.

Referring to FIGS. 1 and 12, the front upper structure 1311 of the front exterior structure 131 can be installed so that a plate surface thereof gradually inclines toward the front (FD) downward (see θ1 of FIG. 12). In addition, the front lower structure 1312 may be formed so that a plate surface thereof gradually inclines toward the rear (BD) downward (see θ2 in FIG. 12).

With this configuration, even if rain, snow, or foreign matter falls from above, it may move downward along the front exterior structure 131 and may fall to the ground at a boundary area between the front upper structure 1311 and the front lower structure 1312. Accordingly, foreign substances may be blocked from entering the entrance 261.

Here, as described above, the frame structure 110 may include the front frame 111, as illustrated in FIG. 11. The front frame 111 may constitute the front (FD) framework of the trailer body 100.

Here, the front exterior structure 131 may be installed on the front frame 111 to constitute the front (FD) exterior of the trailer body 100.

In an embodiment of the present disclosure, the front frame 111 may include a front upper frame 1111 and a front lower frame 1112.

In an embodiment, the front upper frame 1111 may support the front upper structure 1311 such that the front upper structure 1311 gradually inclines toward the front (FD) downward. For example, the front upper frame 1111 may be implemented in a diagonal quadrangular frame shape and may be formed to gradually incline toward the front (FD) downward.

The front lower frame 1112 may support the front lower structure 1312 such that the front lower structure 1312 gradually inclines toward the rear (BD) downward. The front lower frame 1112 may also be implemented in a diagonal quadrangular frame shape, and may be formed to gradually incline toward the rear (BD) downward. Here, as explained above, the boundary area between the front upper frame 1111 and the front lower frame 1112 may be configured to share one frame.

In an embodiment, the front upper structure 1311 may be located at the front (FD) of the mezzanine space 420. In addition, the front upper structure 1311 may be made of a material, such as glass, that allows the outside of the front (FD) to be viewed from the mezzanine space 420. Accordingly, a user may relax in the mezzanine space 420 while viewing the outside of the trailer body 100 through the front upper structure 1311.

Meanwhile, the front frame 111 may include a machine room frame 1113 to form the machine room 430 on a first side in the lateral direction (SD). Additionally, the front frame 111 may include an entrance frame 1114 to form the entrance 261 opened and closed by the entrance door 260 on a second side in the lateral direction (SD).

The machine room frame 1113 may be implemented in the form of a rectangular parallelepiped frame to form a space inside. In addition, the rear (BD) wall surface of the machine room frame 1113, i.e., the wall surface facing the stairs 250, may be formed by the machine room partition structure 230, and the machine room frame 1113 may be built into the machine room partition structure 230 to support the wall surface. In addition, the lateral (SD) wall surface 233 of the machine room 430 may be formed by a wall fixed to the machine room frame 1113 or by a partition structure.

In addition, as described above, the removable front (FD) wall surface 234 and the communication grille 431 may be installed on the front (FD) side of the machine room frame 1113.

Here, as an example, the machine room frame 1113 and the entrance frame 1114 may be installed to be further apart from toward the rear (BD) side than the front lower frame 1112 of the front frame 111. Through this, a separation space may be formed between the entrance 261 and the machine room 430 and the front exterior structure 131, so that, as described above, even if the entrance door 260 is opened, foreign substances, etc. may be prevented from flowing into the entrance 261 by the separation space.

In an embodiment of the present disclosure, as illustrated in FIG. 1, an exterior grill formed by penetrating the front exterior structure 130 in the front-rear direction is applied as an example. Through this, the air from the outdoor unit 320 discharged through the communication grille 431 on the front (FD) side of the machine room 430 may be discharged to the outside through the exterior grille.

The trailer body 100 according to an embodiment of the present disclosure may include entrance stairs 250.

The entrance stairs 250 may be installed on the lower side of the entrance frame 1114 of the front frame 111. In an embodiment, the entrance stairs 250 may be provided to be foldable and may be installed so that the entrance stairs 250 may be inserted into and withdrawn from a receiving part of the stairs 250 in a folded state as shown in FIG. 4.

Through this, when the mobile-home-type trailer 10 according to an embodiment of the present disclosure is moved while being towed by the vehicle C, etc., the mobile-home-type trailer 10 may be moved with the entrance stairs 250 folded and inserted into the receiving part of the stairs 250. In addition, when using the mobile-home-type trailer 10, the entrance stairs 250 may be withdrawn from the receiving part of the stairs 250 to be used as stairs 250.

Meanwhile, the exterior structure 130 according to an embodiment of the present disclosure may include a rear (BD) exterior structure 130 as illustrated in FIG. 2.

The rear (BD) exterior structure 130 according to an embodiment of the present disclosure may constitute an exterior of the rear (BD) side of the trailer body 100. In an embodiment, the rear (BD) exterior structure 130 may be formed to gradually incline toward the front (FD) side in a downward direction.

This allows rain, snow, or foreign matter falling from above to easily fall downward without getting caught or stuck on the rear (BD) exterior structure 130.

In an embodiment of the present disclosure, the rear (BD) exterior structure 130 may be made of a transparent material, such as tempered glass. Through this, the design elements of exterior shape of the rear (BD) may be improved.

Here, the frame structure 110 according to an embodiment of the present disclosure may include the rear frame 112 constituting the rear (BD) framework of the trailer body 100, as illustrated in FIG. 11.

In an embodiment, the rear frame 112 may include a rear vertical frame 1121 and a rear inclined frame 1122.

In an embodiment of the present disclosure, the rear vertical frame 1121 may be formed in a vertical direction. In addition, the rear inclined frame 1122 may be arranged to be inclined so that a gap between the rear inclined frame 1122 and the rear vertical frame 1121 increases gradually upward, as shown in FIGS. 11 and 12 (see θ3 in FIG. 12). Here, the rear inclined frame 1122 may support the rear (BD) exterior structure 130, so that the rear (BD) exterior structure 130 may be installed so as to be inclined as described above.

In an embodiment, a rear internal (BD) structure 59 constituting an interior rear (BD) wall surface may be installed on the rear vertical frame 1121. For example, a mirror may be installed on the rear internal (BD) structure 59 to allow inward viewing.

Here, a space may be formed between the rear internal (BD) structure 59 and the rear (BD) exterior structure 130 by the inclined structure between the rear vertical frame 1121 and the rear inclined frame 1122. Through this space, even if the internal rear (BD) structure, such as a mirror, is broken while the vehicle C is driving or due to an external impact, a broken piece may fall into the space between the rear internal (BD) structure 59 and the rear (BD) exterior structure 130, ensuring a safer living environment.

In an embodiment of the present disclosure, as illustrated in FIG. 11, the inter-floor partition frame 211 may support the inter-floor partition structure 210 within the inter-floor partition structure 210.

To be more specific, the inter-floor partition frame 211 may be disposed between the upper and lower plates of the inter-floor partition structure 210 and support the inter-floor partition structure 210.

As described above, the inter-floor partition structure 210 may form the ceiling of the machine room 430 and extend toward the rear (BD) side, and as illustrated in FIG. 11, the inter-floor partition frame 211 may also have a shape extending from the upper portion of the machine room 430 toward the rear (BD) side.

Here, the upper and lower plates of the inter-floor partition structure 210, supported by the inter-floor partition frame 211, may constitute the bottom of the mezzanine space 420 and the ceiling of the first floor space 410, respectively.

In an embodiment of the present disclosure, the inter-floor partition structure 210 may be composed of the upper plate, the lower plate, and the inter-floor partition frame 211 supporting them. However, the inter-floor partition structure 210 may include side plates connecting the upper and lower plates, support columns connecting and supporting the upper and lower plates from the inside, etc.

The lower frame 113 according to an embodiment of the present disclosure may be provided in a quadrangular frame shape as illustrated in FIG. 11 and may support the lower side of the trailer body 100. Here, the lower frame 113 may be combined with the moving tray 30 described above and may be fixed to the moving tray 30. In addition, the bottom surface of the residential space 400 may be installed on the upper part of the lower frame 113.

In an embodiment, the lower frame 113 may include multiple lower horizontal frames 1131 extending in the lateral direction (SD), and this will be described in detail below.

An upper frame 114 according to the present disclosure may constitute the upper framework of the trailer body 100. In addition, an upper exterior structure 133 constituting the upper exterior of the trailer body 100 may be installed on the upper frame 114.

In an embodiment of the present disclosure, as illustrated in FIG. 1, the upper exterior structure 133 may have an arch shape (A) relative to a front-rear directional axis. This allows rain, snow or foreign matter that falls on the upper exterior structure 133 to easily move in the lateral direction (SD) and fall to the outside.

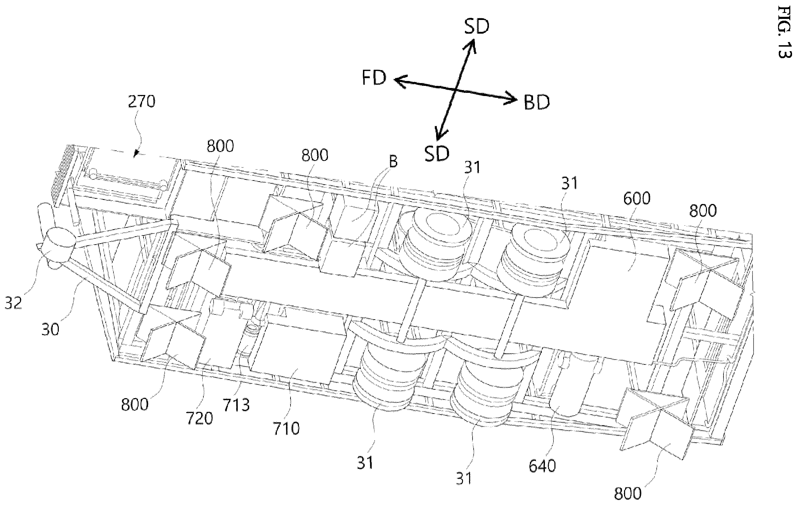

In an embodiment, in an embodiment of the present disclosure, at least one solar panel 1331 may be installed on the upper exterior structure 133. Solar energy collected through the solar panel 1331 may be converted into electrical energy and used to charge the battery B. In an embodiment, the battery B may be installed on the lower side of the trailer body 100, as shown in FIG. 13.

Here, the solar panel 1331 may also be installed to have an arch shape so that rainwater, etc. may easily flow in the lateral direction (SD).

A side frame 115 on each of opposite sides according to an embodiment of the present disclosure may constitute a side framework of the trailer body 100, as illustrated in FIG. 11. In addition, a side exterior structure 134 may be installed on the side frame 115 to constitute the side exterior of the trailer body 100.

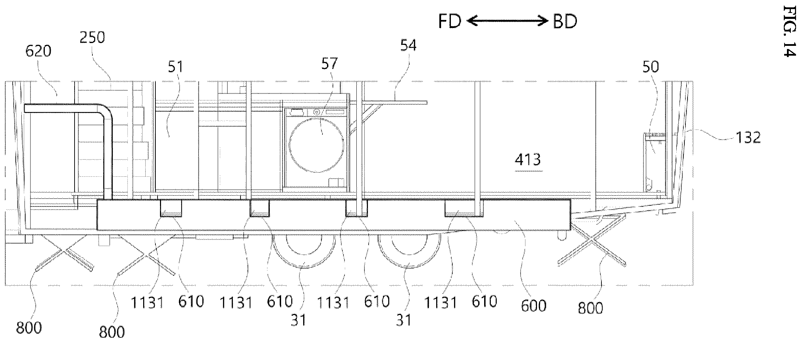

FIG. 13 is a bottom view of the lower side of the mobile-home-type trailer 10 according to an embodiment of the present disclosure, and FIG. 14 is a side view of the lower side of the mobile-home-type trailer 10 according to an embodiment of the present disclosure.

Referring to FIGS. 13 and 14, the mobile-home-type trailer 10 according to the embodiment of the present disclosure may include a purification tank 600.

The purification tank 600 according to an embodiment of the present disclosure may be supported by the lower frame 113 by extending in a front-rear direction from the lower side of the trailer body 100.

In an embodiment, the purification tank 600 may have a plurality of frame insertion grooves 610 spaced apart from each other in the front-rear direction and each formed along the lateral direction (SD). Here, the purification tank 600 may be installed on the lower frame 113 so that the lower horizontal frames 1131 described above are inserted upward into the frame insertion grooves 610, respectively.

Through this, when the mobile-home-type trailer 10 moves in accordance with the movement of the vehicle C, the frame insertion grooves 610 of the purification tank 600 may be held on the lower horizontal frames 1131, thereby restricting the forward and rearward movements of the purification tank 600 and enabling a more stable installation.

That is, when water is stored in the purification tank 600, the weight of the purification tank 600 may increase, and when the mobile-home-type trailer 10 moves, a large force may be applied to move the purification tank 600 in forward and backward directions due to a sudden stop or a sudden start. Accordingly, the forward and rearward movements may be limited by the lower horizontal frames 1131 inserted into the frame insertion grooves 610, thereby enabling a more stable installation.

Meanwhile, the mobile-home-type trailer 10 according to an embodiment of the present disclosure may include a supply pipe 620. The supply pipe 620 may supply external water to the purification tank 600.

In an embodiment, the supply pipe may have a first side extended to the machine room 430 and a second side connected to the purification tank 600, and thus may supply external water to the purification tank 600. Here, a supply terminal 621 to which a hose for supplying water from the outside can be connected may be provided on an end of the machine room 430 side of the supply pipe 620. FIG. 4 shows an example in which the supply terminal 621 is installed to be exposed to the outside of the front (FD) wall surface of the machine room 430, for example, to the outside of the communication grille 431.

In an embodiment, the bottom surface of the purification tank 600 may be formed to incline downward toward the rear (BD) side. In addition, a water supply pipe 630 for supplying water from the purification tank 600 to the residential space 400 may be connected to the rear (BD) side of the purification tank 600.

That is, the bottom surface of the purification tank 600 may be formed to incline toward the rear (BD), so that water in the purification tank 600 may be ultimately collected to the rear (BD) side, thereby enabling maximum utilization of the water in the purification tank 600.

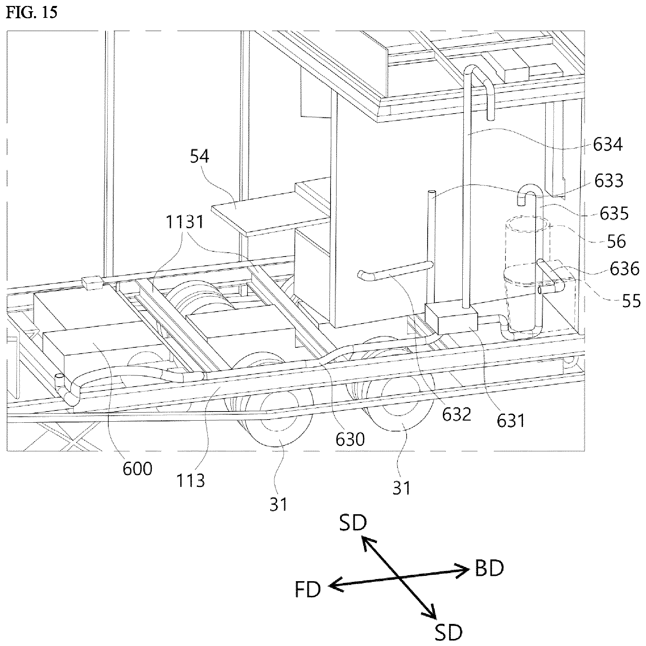

FIG. 15 is a drawing illustrating the water supply structure of the mobile-home-type trailer 10 according to an embodiment of the present disclosure.

Referring to FIG. 15, the water supply pipe 630 connected to the rear (BD) side of the purification tank 600 may extend from the lower side of the trailer body 100 toward the front (FD). Here, a water supply pump 640 for supplying water stored in a water supply tank to the water supply pipe 630 may be installed on the lower side of the trailer body 100 as shown in FIG. 13.

In an embodiment, the water supply pipe 630 may be distributed and supplied to the residential space 400 through a water distributor 631. FIG. 15 illustrates an example in which a pipe 632 for supplying water to the washing machine 57, a pipe 633 for supplying water to the sink 52, a pipe 634 for supplying water to a shower installed on the upper side of the bathroom, a pipe 635 for supplying water to the washbasin 56, and a pipe 636 for supplying water to the toilet 55 are distributed through the water distributor 631.

In FIG. 15, the water supply pipes are shown as being exposed to the outside for convenience of explanation, but may also be installed to be embedded in the bottom of the residential space 400, the residential partition structure 220, and the inter-floor partition structure 210 so as not to be exposed to the outside.

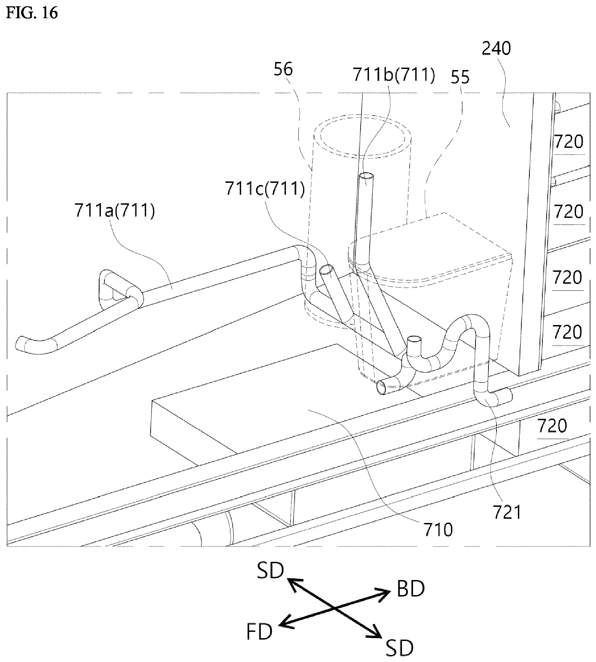

Hereinafter, the waste and sewage treatment structure of the mobile-home-type trailer 10 according to the embodiment of the present disclosure will be described with reference to FIGS. 16 to 18.

The mobile-home-type trailer 10 according to the embodiment of the present disclosure may include a recyclable waste tank 710, a wastewater pipe 711, a recycling pipe 712, and a wastewater pump 713.

The recyclable waste tank 710 according to an embodiment of the present disclosure may be installed on the lower frame 113. Here, for example, the recyclable waste tank 710 may be disposed on the lower side of the bottom surface of the residential space 400 and fixed to the lower frame 113.

The wastewater pipe 711 according to an embodiment of the present disclosure may have a first side connected to the recyclable waste tank 710. In addition, a second side of the wastewater pipe 711 may extend to at least one of the first lower space 411 and the second lower space 412, thereby allowing wastewater to flow to the recyclable waste tank 710.

In an embodiment, as illustrated in FIG. 16, the wastewater pipe 711 may include a pipe 711a that allows the flow of wastewater discharged from the washing machine 57 and the sink 52 of the first lower space 411. The pipe 711a may extend through the residential partition structure 220 to the first lower space 411.

In addition, the wastewater pipe 711 may include a pipe 711b for allowing the flow of wastewater discharged from the washbasin 56 in the second lower space 412, that is, the bathroom and lavatory, and a pipe 711c for allowing the flow of wastewater discharged from the bottom of the bathroom.

These wastewater pipes 711 may be joined at the front end of the recyclable waste tank 710 so as to return wastewater discharged from each location to the recyclable waste tank 710.

A first side of the recycling pipe 712 may be connected to the recyclable waste tank 710. In addition, a second side of the recycling pipe 712 may extend to the toilet 55 installed in at least one of the first lower space 411 and the second lower space 412. In an embodiment of the present disclosure, the toilet 55 may be installed in the second lower space 412.

Here, the wastewater pump 713 supplies wastewater collected in the recyclable waste tank 710 to the toilet 55 by causing the flow of the wastewater stored in the recyclable waste tank 710 through the recycling pipe 712, thereby recycling domestic wastewater as water used in the toilet 55.

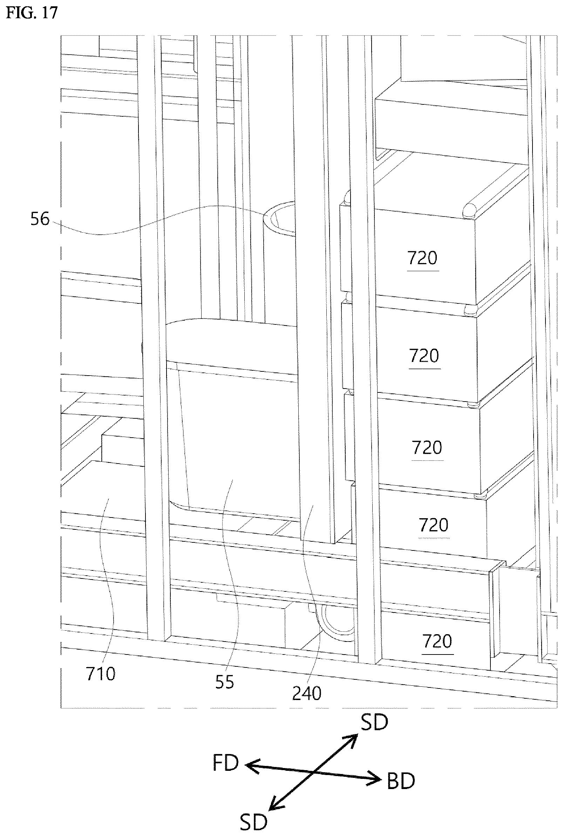

Meanwhile, as illustrated in FIG. 17, the mobile-home-type trailer 10 according to an embodiment of the present disclosure may include a toilet tank 720 disposed in the lower space of the stairs 250 to collect wastewater of the toilet 55 installed in the second lower space 412.

In an embodiment of the present disclosure, a plurality of toilet tanks 720 may be arranged to be stacked in the lower space of the stairs 250. In addition, among the plurality of stacked toilet tanks 720, the toilet tank 720 at a lower end thereof may be connected to a pipe 721 of the toilet 55 to collect wastewater discharged from the toilet 55.

As described above, a spare toilet tank 720 may be stored in the lower space of the stairs 250, so that when one toilet tank 720 is full and cannot be disposed of, it may be replaced with another toilet tank 720.

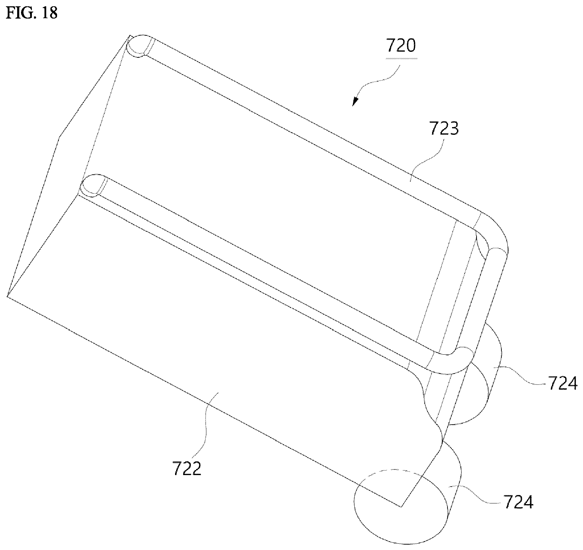

FIG. 18 is a drawing showing an example of the toilet tank 720 according to an embodiment of the present disclosure. The toilet tank 720 may include a container body 722 having a space formed therein, and a handle 723. Additionally, a pair of movable wheels 724 may be installed on the edge of the container body 722.

Here, the handle 723 may be rotatably installed on the container body 722, and when the container body 722 is stored, the handle 723 may be maintained in a folded state as shown in FIG. 18, and when the container body 722 is moved to handle waste in the toilet tank 720, the handle 723 may be unfolded and the container body 722 may be easily moved by using the movable wheels 724.

Although the present disclosure has been described with reference to the attached drawings, the present disclosure is not limited to the above embodiments and may be manufactured in various different forms, and those skilled in the art to which the present disclosure belongs will understand that the present disclosure may be implemented in other specific forms without changing the technical idea or essential features of the present disclosure. Therefore, it should be understood that the embodiments described above are exemplary in all respects and not limiting.

**<Description of the Reference Numerals in the Drawings>**

| | | | |
|---|---|---|---|
| 10: | Mobile-home-type trailer | 100: | Trailer body |
| 110: | Frame structure | 111: | Front frame |
| 1111: | Front upper frame | 1112: | Front lower frame |
| 1113: | Machine room frame | 1114: | Entrance frame |
| 112: | Rear frame | 1121: | Rear vertical frame |
| 1122: | Rear inclined frame | 113: | Lower frame |
| 1131: | Lower horizontal frame | 114: | Upper frame |
| 115: | Side frame | 130: | Exterior structure |
| 131: | Front exterior structure | 1311: | Front upper structure |
| 1312: | Front lower structure | 133: | exterior structure |
| 1331: | Solar panel | 134: | Side exterior structure |
| 210: | Inter-floor partition structure | 220: | Residential partition structure |
| 230: | Machine room partition structure | 240: | Stair partition wall |
| 250: | Stair | 260: | Entrance door |
| 300: | Air conditioner | 310: | Indoor unit |
| 320: | Outdoor unit | 330: | Air supply duct |
| 331: | Embedded air supply duct | 3311: | First embedded duct |
| 3312: | Second embedded duct | 3313: | Guide vane |
| 332: | Connecting air supply duct | 340: | Intake duct |
| 341: | Air conditioning outlet | 342: | Airconditioning inlet |
| 350: | the ventilation module | 351: | Ventilation fan |
| 352: | Ventilation port | 400: | Residential space |
| 410: | First floor space | 411: | Firstlower space |
| 412: | Second lower space | 413: | Living room space |
| 420: | Mezzanine space | 430: | Machine room |
| 431: | Communication grille | 432: | Lowercommunication opening |
| 433: | Flow blocking plate | 500: | Exhaust unit |
| 510: | Exhaust intake part | 520: | Exhaust discharge part |
| 530: | Exhaust duct | 600: | Purification tank |
| 610: | Frame insertion groove | 620: | Supply pipe |
| 621: | Supply terminal | 630: | Water supply pipe |
| 631: | Water distributor | 640: | Water supply pump |
| 710: | Waste tank | 711: | Wastewater pipe |
| 712: | Recycling pip | 713: | Wastewater pump |
| 720: | Toilet tank | 721: | Toilet pipe |

### Industrial Applicability

The present disclosure may be applied to the field of a mobile-home-type trailer.

## Claims

1. A mobile-home-type trailer comprising:
a trailer body having a residential space and a machine room formed therein, with the machine room formed at a position biased to one side; and
an air conditioner installed inside the machine room so as not to be exposed to the outside of the trailer body.

2. The mobile-home-type trailer of claim 1, wherein the machine room is formed at a position biased forward in a towing direction in which the trailer body is towed; and
the residential space extends from the machine room in a direction opposite to the towing direction.

3. The mobile-home-type trailer of claim 2, wherein the air conditioner comprises:
an indoor unit installed on an upper part of the machine room; and
an outdoor unit installed in the machine room to be positioned below the indoor unit.

4. The mobile-home-type trailer of claim 3, wherein the indoor unit is installed on a rear wall surface among inner wall surfaces of the machine room; and
the outdoor unit is disposed below the indoor unit by being spaced apart forward from the rear wall surface of the machine room.

5. The mobile-home-type trailer of claim 4, wherein a communication grille that communicates with an outside is formed in at least one area of a lower part of a front wall surface among the inner wall surfaces of the machine room;
a lower communication opening that communicates with the outside of the trailer body is formed on a bottom surface of the machine room; and
external air introduced through the lower communication opening according to an operation of the outdoor unit flows to the outside through the communication grille after passing through the outdoor unit.

6. The mobile-home-type trailer of claim 5, wherein the lower communication opening is formed at a lower part of a separation space between the outdoor unit and the rear wall surface of the machine room.

7. The mobile-home-type trailer of claim 4, further comprising:
a flow blocking plate protruding from the rear wall surface of the machine room toward a front wall surface thereof at a position between the indoor unit and the outdoor unit in a vertical direction and configured to block air flowing according to an operation of the outdoor unit from flowing to the indoor unit.

8. The mobile-home-type trailer of claim 3, further comprising:
an air supply duct configured to discharge air discharged from the indoor unit into the residential space; and
an air intake duct configured to draw air from the residential space and deliver the air to the indoor unit.

9. The mobile-home-type trailer of claim 8, further comprising:
an inter-floor partition structure configured to divide the residential space into a first floor space and a mezzanine space,
wherein the air supply duct extends along the inter-floor partition structure from the indoor unit while embedded within the inter-floor partition structure and discharges air from the indoor unit into the residential space at a rear end of the inter-floor partition structure.

10. The mobile-home-type trailer of claim 9, wherein the air intake duct communicates the indoor unit with the mezzanine space and draws in air from the mezzanine space.

11. The mobile-home-type trailer of claim 9, wherein the inter-floor partition structure extends rearward from the machine room and divides the residential space into the first floor space and the mezzanine space.

12. The mobile-home-type trailer of claim 9, wherein the air supply duct comprises:
an embedded air supply duct extending rearward while embedded within the inter-floor partition structure; and
a connecting air supply duct configured to connect the indoor unit and the embedded air supply duct along a lateral direction relative to the towing direction.

13. The mobile-home-type trailer of claim 12, wherein the embedded air supply duct comprises:
a first embedded duct connected to the connecting air supply duct; and
a second embedded duct extending rearward from the first embedded duct,
wherein the second embedded duct has a cross-sectional area increasing gradually rearward.

14. The mobile-home-type trailer of claim 13, wherein the second embedded duct has a plurality of guide vanes formed along a rear thereof to be laterally spaced apart from each other and configured to guide a flow of air within the second embedded duct.

15. The mobile-home-type trailer of claim 14, wherein the plurality of guide vanes is laterally spaced apart from each other so as to have a fan-like shape rearward.

16. The mobile-home-type trailer of claim 9, wherein the inter-floor partition structure forms a ceiling of the machine room and extends rearward from the machine room;
an air conditioning inlet that communicates the mezzanine space with the machine room is formed in the ceiling of the machine room; and
the air intake duct communicates the air conditioning inlet with the indoor unit so as to draw in air from the mezzanine space through the air conditioning inlet.

17. The mobile-home-type trailer of claim 9, further comprising:
a residential partition structure configured to divide the first floor space below the inter-floor partition structure into a first lower space and a second lower space in a lateral direction relative to the towing direction; and
an exhaust unit configured to communicate with at least one of the first lower space and the second lower space and exhaust air from the first lower space or the second lower space to the machine room.

18. The mobile-home-type trailer of claim 17, wherein the exhaust unit comprises:
an exhaust intake part configured to communicate with at least one of the first lower space and the second lower space;
an exhaust discharge part configured to communicate with the machine room; and
an exhaust duct configured to connect the exhaust intake part with the exhaust discharge part and installed with at least one area thereof embedded in the inter-floor partition structure.

19. The mobile-home-type trailer of claim 18, wherein the exhaust intake part is exposed to face downward from the inter-floor partition structure and draws in air from the first lower space or the second lower space.

20. The mobile-home-type trailer of claim 18, further comprising:
a machine room partition structure configured to partition the machine room from the residential space;
a stair partition wall spaced apart rearward from the machine room partition structure; and
stairs installed between the machine room partition structure and the stair partition wall to ensure movement to the mezzanine space,
wherein the residential partition structure extends rearward from the stair partition wall.
